# EUROPEAN PATENT APPLICATION

(11) **EP 1 931 057 A1**
(43) Date of publication of application: **11.06.2008**
(21) Application number: 06810268.0
(22) Date of filing: 19.09.2006
(51) Int. Cl.: H04B 7/06, H04B 1/707, H04B 7/26

(54) **MOBILE UNIT, MOBILE COMMUNICATION SYSTEM, AND ANTENNA VERIFICATION METHOD**

(30) Priority: 28.09.2005 JP 2005281030
(71) Applicant: NEC Corporation, Minato-ku Tokyo 108-8001 (JP)
(72) Inventor: SATOU, Kazunori, Tokyo 108-8001 (JP)
(74) Representative: Vossius & Partner
(86) International application number: PCT/JP2006/318526
(87) International publication number: WO 2007/037151

(57) **Abstract**

A mobile device which can reduce an error rate in phase determination in antenna verification and intend to improve a reception performance is obtained. When a more likely phase difference is selected from two predetermined candidate phase differences, based on correlation values between a received signal from a first antenna of a BTS and respective signals in which a received signal from a second antenna of the BTS has been phase-rotated by the two predetermined candidate phase differences respectively, a weighting processing unit 16 of the mobile device performs a weighting process with respect to the above described correlation values so that the more likely candidate phase difference may be easily selected based on information on a phase difference between the first and second antennas notified from the BTS.

## Description

### Technical Field

The present invention pertains to a mobile device, a mobile communication system and an antenna verification method, and more particularly, to an antenna verification method in a transmit diversity scheme.

### Background Art

Antenna verification in a conventional mobile communication system applied with a transmit diversity scheme of a closed loop mode will be described (for example, see Non Patent Document 1).

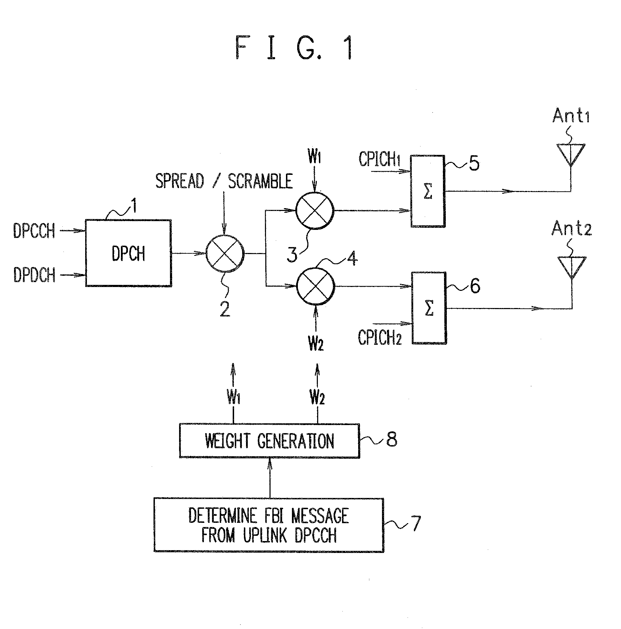

Figure 1 is a diagram showing a configuration of a BTS (Base Transceiver Station) in the conventional mobile communication system. In Figure 1, a DPCH (Dedicated Physical Channel) unit 1 takes a DPCCH (Dedicated Physical Control Channel) and a DPDCH (Dedicated Physical Data Channel) as input and outputs a DPCH. This DPCH is spread by a spreading unit 2, and subsequently branched into two and inputted to multipliers 3 and 4.

In the multipliers 3 and 4, spread signals of the DPCH are multiplied by weight factors w1 and w2 respectively and phases are controlled. Multiplexers 5 and 6 multiplex the phase-controlled DPCHs with CPICHs (Common Pilot Channels), and outputs of the multiplexers 5 and 6 are transmitted to a mobile device via antennas Ant1 and Ant2, respectively. It should be noted that a CPICH1 and a CPICH2 are the same data.

Here, the weight factor w1 is a fixed value, and the weight factor w2 is a value depending on feedback information from the mobile device. The mobile device calculates a phase difference between the antennas Ant1 and Ant2, includes phase information on the antenna Ant2 in which reception characteristics are most improved, in an FBI (Feedback Information) message in an uplink DPCCH, and transmits it to the BTS. In the BTS, an FBI message determination unit 7 determines the phase information on the antenna Ant2 in the FBI message transmitted from the mobile device, and a weight generation unit 8 generates the weight factor w2 depending on this phase information.

If the phase information transmitted by the mobile device cannot be correctly notified to the BTS due to noises in a radio wave propagation environment, in the BTS, the weight factor w2 is generated based on erroneous phase information and the phase of the antenna Ant2 is changed. At this time, since the mobile device uses the phase information transmitted by the mobile device itself to perform a receiving operation, enough gain of the antenna Ant2 cannot be obtained and the reception characteristics are degraded.

Therefore, in order to determine whether the phase information transmitted by the mobile device itself has been correctly received by the BTS, the mobile device determines w2 which has been determined by the BTS, from a received signal from the BTS for each slot, and performs the receiving operation by using this.

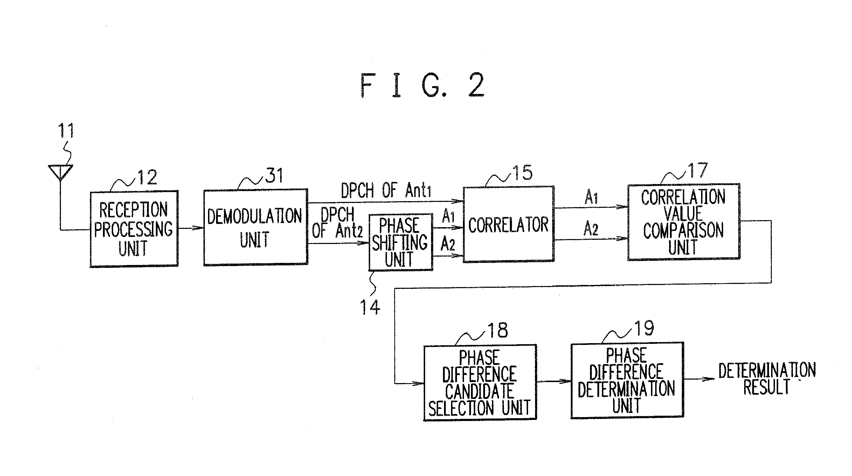

Figure 2 is a diagram showing a configuration of the mobile device in the conventional mobile communication system. In Figure 2, the signal from the BTS received by an antenna 11 is inputted to a demodulation unit 31 via a reception processing unit 12. The demodulation unit 31 decomposes a composite signal of the antennas Ant1 and Ant2 from the BTS into components of the antennas Ant1 and Ant2 and outputs the DPCH of the antenna Ant1 and the DPCH of the antenna Ant2, and the DPCH of the antenna Ant1 is inputted to a correlator 15, while the DPCH of the antenna Ant2 is inputted to a phase shifting unit 14.

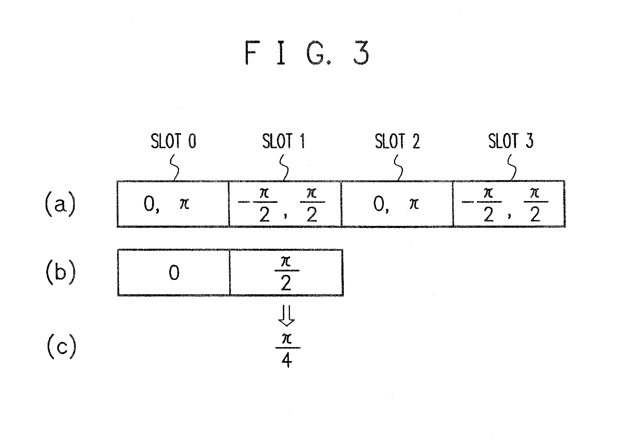

The phase shifting unit 14 phase-rotates the DPCH of the antenna Ant2 by two predetermined candidate phase differences A1 and A2, respectively in each slot, and outputs them to the correlator 15. As shown in Figure 3(a), the candidate phase differences A1 and A2 have been previously defined for each slot such as "0" and "π" in a slot 0 and a slot 2 (even-numbered slots), and "π/2" and "π/2" in a slot 1 and a slot 3 (odd-numbered slots). Therefore, for example, in the odd-numbered slot, the phase shifting unit 14 outputs the DPCH of the antenna Ant2 phase-rotated by "-π/2" and the DPCH of the antenna Ant2 phase-rotated by "π/2".

The correlator 15 calculates a correlation value between the DPCH of the antenna Ant1 and the DPCH of the antenna Ant2 phase-rotated by A1, and also calculates a correlation value between the DPCH of the antenna Ant1 and the DPCH of the antenna Ant2 phase-rotated by A2, and outputs them to a correlation value comparison unit 17.

The correlation value comparison unit 17 determines which of the inputted correlation values is larger or smaller, and if the correlation value between the DPCH of the antenna Ant1 and the DPCH of the antenna Ant2 phase-rotated by A1 is larger, a phase difference candidate selection unit 18 selects A1, or if the correlation value between the DPCH of the antenna Ant1 and the DPCH of the antenna Ant2 phase-rotated by A2 is larger, the phase difference candidate selection unit 18 selects A2.

Based on selection results at the phase difference candidate selection unit 18 at this time and a previous time, a phase difference determination unit 19 determines the phase difference between the antennas Ant1 and Ant2 with four kinds of phase resolutions "π/4", "π/4", "3π/4" and "-3π/4". For example, as shown in Figure 3(b), if the selection result at this time (the selection result in the slot 1) is "π/2" and the selection result at the previous time (the selection result in the slot 0) is "0", the phase difference determination unit 19 determines the phase difference between the antennas Ant1 and Ant2 as "π/4" among "π/4", "-π/4", "3π/4" and "-3π/4", based on "π/2" and "0" as shown in Figure 3(c). Since the mobile device uses this determination result to perform the receiving operation, the degradation in the reception characteristics can be avoided. It should be noted that the mobile device transmits this determination result as the feedback information to the BTS.

Non-Patent Document 1: 3GPP TS 25.214 V6.6.0, 7 Closed loop mode 1 transmit diversity, June 2005

As described above, while the phase information transmitted by the mobile device may not be able to be correctly received by the BTS due to effects of the noises, the noises also have similar effects on the mobile device and therefore errors may be made in the determination. It should be noted that although the BTS has notified the phase information on the antenna Ant2 changed by the multiplication by the weight factor w2 generated depending on the feedback information from the mobile device (the information on the phase difference between the antennas Ant1 and Ant2) to the mobile device, the mobile device has not used this notified phase information in the phase determination.

### Disclosure of the Invention

It is an object of the present invention to provide a mobile device, a mobile communication system and an antenna verification method which can reduce an error rate in phase determination in antenna verification and intend to improve a reception performance.

A mobile device according to the present invention is a mobile device in a mobile communication system applied with a transmit diversity scheme, the above described mobile device calculating correlation values between a received signal from a first antenna of a base station and respective signals in which a received signal from a second antenna of the above described base station has been phase-rotated by two predetermined candidate phase differences respectively, selecting one of the above described two candidate phase differences based on these correlation values, and determining a phase difference between the above described first and second antennas from this selection result and a previous selection result, and is characterized in that the above described mobile device includes a weighting processing unit which performs a weighting process with respect to the above described correlation values based on information on the phase difference between the above described first and second antennas notified from the above described base station, so that one of the above described two candidate phase differences is selected based on the above described correlation values having been subjected to the above described weighting process.

An antenna verification method according to the present invention is an antenna verification method for a mobile device in a mobile communication system applied with a transmit diversity scheme, the above described antenna verification method calculating correlation values between a received signal from a first antenna of a base station and respective signals in which a received signal from a second antenna of the above described base station has been phase-rotated by two predetermined candidate phase differences respectively, selecting one of the above described two candidate phase differences based on these correlation values, and determining a phase difference between the above described first and second antennas from this selection result and a previous selection result, and is characterized in that the above described antenna verification method includes a weighting processing step of performing a weighting process with respect to the above described correlation values based on information on the phase difference between the above described first and second antennas notified from the above described base station, so that one of the above described two candidate phase differences is selected based on the above described correlation values having been subjected to the above described weighting process.

A mobile communication system according to the present invention is a mobile communication system applied with a transmit diversity scheme, including a mobile device which calculates correlation values between a received signal from a first antenna of a base station and respective signals in which a received signal from a second antenna of the above described base station has been phase-rotated by two predetermined candidate phase differences respectively, selects one of the above described two candidate phase differences based on these correlation values, and determines a phase difference between the above described first and second antennas from this selection result and a previous selection result, and is characterized in that the above described mobile device has a weighting processing unit which performs a weighting process with respect to the above described correlation values based on information on the phase difference between the above described first and second antennas notified from the above described base station, so that one of the above described two candidate phase differences is selected based on the above described correlation values having been subjected to the above described weighting process.

An antenna verification method according to the present invention is an antenna verification method for a mobile communication system applied with a transmit diversity scheme, the above described mobile communication system including a mobile device which calculates correlation values between a received signal from a first antenna of a base station and respective signals in which a received signal from a second antenna of the above described base station has been phase-rotated by two predetermined candidate phase differences respectively, selects one of the above described two candidate phase differences based on these correlation values, and determines a phase difference between the above described first and second antennas from this selection result and a previous selection result, and is characterized in that, in the above described mobile device, the above described antenna verification method has a weighting processing step of performing a weighting process with respect to the above described correlation values based on information on the phase difference between the above described first and second antennas notified from the above described base station, so that one of the above described two candidate phase differences is selected based on the above described correlation values having been subjected to the above described weighting process.

In this way, in the present invention, in the mobile device in the mobile communication system applied with the transmit diversity scheme, when a more likely phase difference is selected from the two predetermined candidate phase differences, based on the correlation values between the received signal from the first antenna of the base station and the respective signals in which the received signal from the second antenna of the base station has been phase-rotated by the two predetermined candidate phase differences respectively, the weighting process is performed with respect to the above described correlation values so that the more likely candidate phase difference may be easily selected based on the information on the phase difference between the first and second antennas notified from the base station.

According to the present invention, with a configuration and operations as will be described below, it is possible to obtain an advantage in which the error rate in the phase determination in the antenna verification can be reduced and the improvement in the reception performance can be intended.

### Exemplary embodiments

An embodiment of the present invention will be described below with reference to the drawings.

A mobile communication system according to an embodiment of the present invention is applied with a transmit diversity scheme of a closed loop mode similarly to the above described conventional mobile communication system, and an configuration of a BTS in the mobile communication system according to an embodiment of the present invention is the same as the configuration shown in Figure 1.

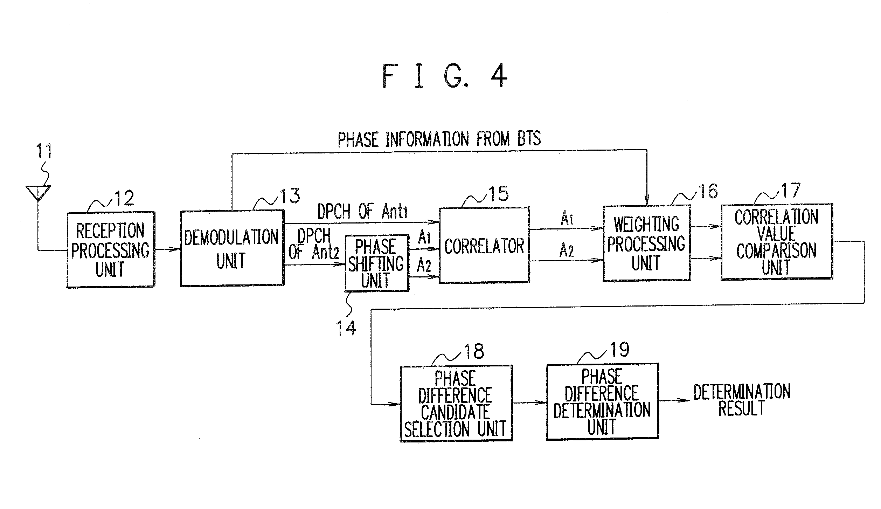

Figure 4 is a diagram showing a configuration of a mobile device in the mobile communication system according to the embodiment of the present invention, and portions which are equal to those of Figure 2 are denoted by the same reference numerals. The mobile device shown in Figure 4 is provided with a weighting processing unit 16, and is different from the mobile device shown in Figure 2 in that a demodulation unit 13 notifies the weighting processing unit 16 of the phase information on the antenna Ant2 notified from the BTS.

Similarly to the demodulation unit 31 shown in Figure 2, the demodulation unit 13 outputs the DPCH of the antenna Ant1 to the correlator 15 and outputs the DPCH of the antenna Ant2 to the phase shifting unit 14. Furthermore, the demodulation unit 13 outputs the phase information on the antenna Ant2 notified from the BTS to the weighting processing unit 16.

The weighting processing unit 16 performs a weighting process with respect to the correlation value between the DPCH of the antenna Ant1 and the DPCH of the antenna Ant2 phase-rotated by A1, and the correlation value between the DPCH of the antenna Ant1 and the DPCH of the antenna Ant2 phase-rotated by A2, which are inputted from the correlator 15, in each slot based on this notified phase information. Therefore, the correlation value comparison unit 17 determines which of the correlation values having been subjected to the weighting process by the weighting processing unit 16 is larger or smaller.

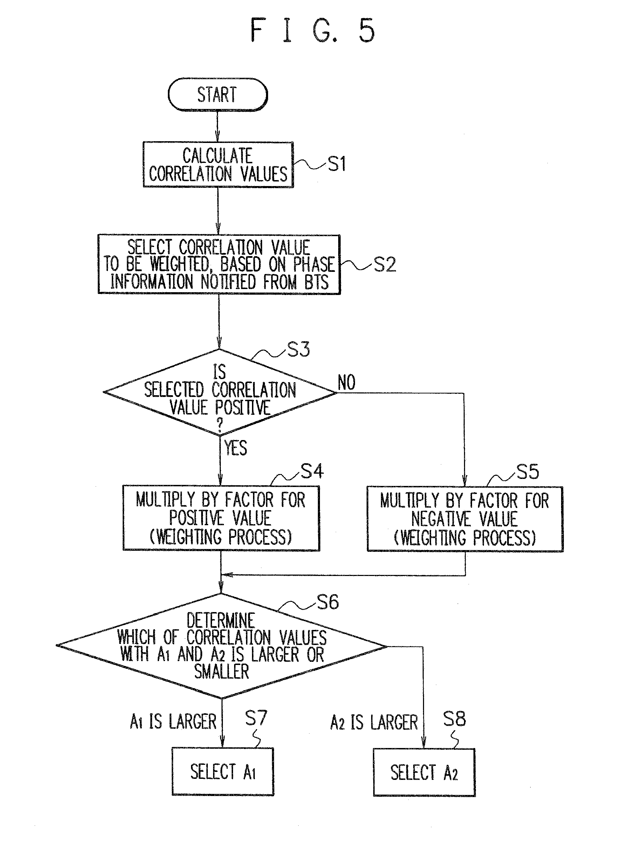

Next, an operation of the mobile device shown in Figure 4 will be described with reference to Figure 5. Figure 5 is a flowchart showing the operation of the mobile device shown in Figure 4.

In Figure 5, when the calculation of the correlation values has been performed by the correlator 15 (step S1), the weighting processing unit 16 selects the correlation value to be weighted, based on the notified phase information (step S2). In other words, the weighting processing unit 16 selects the correlation value between the DPCH of the antenna Ant2 phase-rotated by the candidate phase difference which is closer to the notified phase information in the candidate phase differences A1 and A2, and the DPCH of the antenna Ant1.

As shown in Figure 3, if A1 and A2 are "0" and "π" respectively and the phase information on the antenna Ant2 notified from the BTS is "π/4", since A1 "0" is a value closer to "π/4" than A2 "π", the correlation value between the DPCH of the antenna Ant2 phase-rotated by A1 "0" and the DPCH of the antenna Ant1 is selected.

The weighting processing unit 16 determines whether the correlation value selected at step S2 is positive or negative (step S3), and if the selected correlation value is positive, the weighting processing unit 16 multiplies the selected correlation value by a predetermined factor for a positive value (step S4), or if the selected correlation value is negative, the weighting processing unit 16 multiplies the selected correlation value by a predetermined factor for a negative value (step S5). It should be noted that these factors for the positive value and the negative value are assumed to be values which have been previously defined based on experiments, respectively.

The correlation value comparison unit 17 determines which of the correlation value having been subjected to the weighting process with the multiplication by the predetermined factor at step S4 or S5 and the other correlation value is larger or smaller (step S6), and if the correlation value between the DPCH of the antenna Ant1 and the DPCH of the antenna Ant2 phase-rotated by A1 is larger, the phase difference candidate selection unit 18 selects A1 (step S7), or if the correlation value between the DPCH of the antenna Ant1 and the DPCH of the antenna Ant2 phase-rotated by A2 is larger, the phase difference candidate selection unit 18 selects A2 (step S8). Since the operation of the phase difference determination unit 19 is similar to Figure 2, a description thereof is omitted.

In this way, in the embodiment of the present invention, since the weighting process is performed with respect to the correlation value between the DPCH of the antenna Ant2 phase-rotated by the candidate phase difference which is closer to the phase information notified from the BTS, and the DPCH of the antenna Ant1, it becomes easier for the phase difference candidate selection unit 18 to select the candidate phase difference which is closer to the phase information notified from the BTS, in each slot, and accordingly, it is possible to reduce an error rate in the shift determination in the phase difference determination unit 19.

In an operation example shown in Figure 5, although whether the correlation value is positive or negative is determined at step S3 and the multiplication by the factor depending on a result of the determination is performed, the factor may be one factor regardless of whether the correlation value is positive or negative.

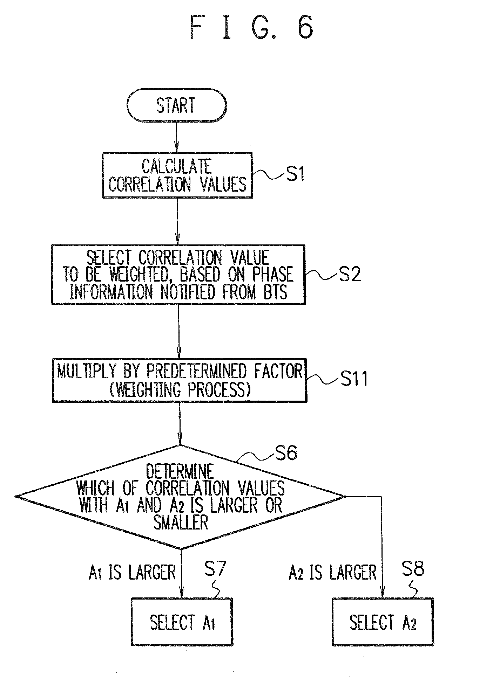

Figure 6 is a flowchart showing another operation of the mobile device shown in Figure 4, and portions which are equal to those of Figure 5 are denoted by the same reference numerals. In Figure 6, after step S2, the weighting processing unit 16 multiplies the correlation value selected at step S2 by the predetermined factor without determining whether the correlation value is positive or negative (step S11), and the correlation value comparison unit 17 determines which of the correlation value having been subjected to the weighting process with the multiplication by the predetermined factor at step S11 and the other correlation value is larger or smaller (step S6).

### Brief Description of the Drawings

Figure 1 is a diagram showing a configuration of a BTS in a conventional mobile communication system;
Figure 2 is a diagram showing a configuration of a mobile device in the conventional mobile communication system;
Figures 3(a) to (c) are diagrams for illustrating an operation of the conventional mobile device;
Figure 4 is a diagram showing a configuration of a mobile device in a mobile communication system according to an embodiment of the present invention;
Figure 5 is a flowchart showing an operation of the mobile device of Figure 4; and
Figure 6 is a flowchart showing another operation of the mobile device of Figure 4.

### Description of Symbols

- 11: Antenna
- 12: Reception processing unit
- 13: Demodulation unit
- 14: Phase shifting unit
- 15: Correlator
- 16: Weighting processing unit
- 17: Correlation value comparison unit
- 18: Phase difference candidate selection unit
- 19: Phase difference determination unit

## Claims

1. A mobile device in a mobile communication system applied with a transmit diversity scheme, said mobile device calculating correlation values between a received signal from a first antenna of a base station and respective signals in which a received signal from a second antenna of said base station has been phase-rotated by two predetermined candidate phase differences respectively, selecting one of said two candidate phase differences based on these correlation values, and determining a phase difference between said first and second antennas from this selection result and a previous selection result, said mobile device comprising: a weighting processing unit which performs a weighting process with respect to said correlation values based on information on the phase difference between said first and second antennas notified from said base station, so that one of said two candidate phase differences is selected based on said correlation values having been subjected to said weighting process.

2. The mobile device according to claim 1, wherein said weighting processing unit performs the weighting process with respect to the correlation value between the received signal from said second antenna phase-rotated by the candidate phase difference which is closer to the phase difference notified from said base station in said two candidate phase differences, and the received signal from said first antenna, by multiplying the correlation value by a predetermined factor.

3. The mobile device according to claim 2, wherein said weighting processing unit determines whether the correlation value to be subjected to said weighting process is positive or negative, and performs the multiplication by a factor depending on a result of the determination.

4. An antenna verification method for a mobile device in a mobile communication system applied with a transmit diversity scheme, comprising: calculating correlation values between a received signal from a first antenna of a base station and respective signals in which a received signal from a second antenna of said base station has been phase-rotated by two predetermined candidate phase differences respectively, selecting one of said two candidate phase differences based on these correlation values, and determining a phase difference between said first and second antennas from this selection result and a previous selection result, a weighting processing step of performing a weighting process with respect to said correlation values based on information on the phase difference between said first and second antennas notified from said base station, so that one of said two candidate phase differences is selected based on said correlation values having been subjected to said weighting process.

5. The antenna verification method according to claim 4, wherein said weighting processing step performs the weighting process with respect to the correlation value between the received signal from said second antenna phase-rotated by the candidate phase difference which is closer to the phase difference notified from said base station in said two candidate phase differences, and the received signal from said first antenna, by multiplying the correlation value by a predetermined factor.

6. The antenna verification method according to claim 5, wherein said weighting processing step determines whether the correlation value to be subjected to said weighting process is positive or negative, and performs the multiplication by a factor depending on a result of the determination.

7. A mobile communication system applied with a transmit diversity scheme, comprising a mobile device which calculates correlation values between a received signal from a first antenna of a base station and respective signals in which a received signal from a second antenna of said base station has been phase-rotated by two predetermined candidate phase differences respectively, selects one of said two candidate phase differences based on these correlation values, and determines a phase difference between said first and second antennas from this selection result and a previous selection result, wherein
said mobile device has a weighting processing unit which performs a weighting process with respect to said correlation values based on information on the phase difference between said first and second antennas notified from said base station, so that one of said two candidate phase differences is selected based on said correlation values having been subjected to said weighting process.

8. The mobile communication system according to claim 7, wherein said weighting processing unit performs the weighting process with respect to the correlation value between the received signal from said second antenna phase-rotated by the candidate phase difference which is closer to the phase difference notified from said base station in said two candidate phase differences, and the received signal from said first antenna, by multiplying the correlation value by a predetermined factor.

9. The mobile communication system according to claim 8, wherein said weighting processing unit determines whether the correlation value to be subjected to said weighting process is positive or negative, and performs the multiplication by a factor depending on a result of the determination.

10. An antenna verification method for a mobile communication system applied with a transmit diversity scheme, said mobile communication system comprising a mobile device which calculates correlation values between a received signal from a first antenna of a base station and respective signals in which a received signal from a second antenna of said base station has been phase-rotated by two predetermined candidate phase differences respectively, selects one of said two candidate phase differences based on these correlation values, and determines a phase difference between said first and second antennas from this selection result and a previous selection result,
in said mobile device, said antenna verification method comprising a weighting processing step of performing a weighting process with respect to said correlation values based on information on the phase difference between said first and second antennas notified from said base station, so that one of said two candidate phase differences is selected based on said correlation values having been subjected to said weighting process.

11. The antenna verification method according to claim 10, wherein said weighting processing step performs the weighting process with respect to the correlation value between the received signal from said second antenna phase-rotated by the candidate phase difference which is closer to the phase difference notified from said base station in said two candidate phase differences, and the received signal from said first antenna, by multiplying the correlation value by a predetermined factor.

12. The antenna verification method according to claim 11, wherein said weighting processing step determines whether the correlation value to be subjected to said weighting process is positive or negative, and performs the multiplication by a factor depending on a result of the determination.
